# EUROPÄISCHE PATENTANMELDUNG

(11) **EP 1 489 297 A1**
(43) Veröffentlichungstag der Anmeldung: **22.12.2004**
(21) Anmeldenummer: 04013853.9
(22) Anmeldetag: 14.06.2004
(51) Int. Cl.: F03D 1/00

(54) **An der Gondel einer Windturbine permanent angebrachte Lasthebevorrichtung .**

(30) Priorität: 18.06.2003 DE 10327849
(71) Anmelder: W2E Wind to Energy GmbH, 18230 Ostseebad-Rerik (DE)
(72) Erfinder: Grever, Konrad, 49326 Melle (DE)
(74) Vertreter: Siekmann, Gunnar, Dipl.-Phys.

(57) **Zusammenfassung**

Die Erfindung bezieht sich auf ein Verfahren zum Auswechseln des Rotorlagers einer Windenergieanlage mit wenigstens einem Rotor, der über das Rotorlager mit einem Maschinenrahmen verbunden ist. Während des Auswechselvorganges wird der Rotor in seiner Gesamtheit über ein Hilfsmittel am Maschinenrahmen befestigt. Nachfolgend wird der Rotor mit dem Hilfsmittel vom Rotorlager getrennt. Durch Verschwenken des Hilfsmittels am Maschinenrahmen wird der Rotor dann von seinem Rotorlager wegbewegt, so daß der Rotor während des Auswechselvorganges mit einem Halteseil am Hilfsmittel aufgehängt ist.

## Beschreibung

Die Erfindung betrifft ein Verfahren und eine Vorrichtung zum Auswechseln des Rotorlagers einer Windenergieanlage mit wenigstens einem Rotor, der über das Rotorlager mit einem Maschinenrahmen verbunden ist.

Der Rotor besteht aus einer Rotomabe und daran angeordneten Rotorblättem. Auf Grund der großen Flügellängen bildet der Rotor an der Windenergieanlage eine besonders sperrige Baugruppe aus. Um das Rotorlager auswechsein zu können, muß der Rotor zuvor vom Gondelkopf der Windenergieanlage abgenommen werden. Zur Demontage des Rotors werden die Rotorblätter in einem ersten Arbeitsschritt von der Rotomabe abgenommen. In einem zweiten Arbeitsschritt wird die Rotomabe vom Rotorlager heruntergenommen, so daß dann das Rotorlager frei zugänglich wird. Aufgrund der großen Turmhöhen bei den bekannten Windenergieanlagen fordert die Demontage des Rotors leistungsstarke Kräne und Seilwinden, deren Einsatz besonders arbeitsintensiv und kostspielig ist.

Der Erfindung liegt die Aufgabe zugrunde, ein Verfahren und eine Vorrichtung der eingangs beschriebenen Gattung aufzuzeigen, mit denen das Auswechseln des Rotorlagers auf besonders effiziente Weise möglich ist.

Diese Aufgabe ist erfindungsgemäß durch ein Verfahren mit den Merkmalen des Patentanspruches 1 und durch eine Vorrichtung mit den Merkmalen des Patentanspruches 8 gelöst. Vorteilhafte Weiterbildungen der Erfindung sind in den jeweils auf diese Patentansprüche rückbezogenen Unteransprüchen angegeben.

Das erfindungsgemäße Verfahren ist dadurch gekennzeichnet, daß der Rotor in seiner Gesamtheit während des Auswechselvorganges. über ein Hilfsmittel am Maschinenrahmen befestigt, vorzugsweise aufgehängt wird. Der Rotor verbleibt somit am Gondelkopf der Windenergieanlage, so daß die Gewichtskraft des Rotors auch während bzw. über die Dauer des Auswechselvorganges vom Turm der Windenergieanlage getragen wird. Auf einen arbeitsintensiven und kostspieligen Einsatz leistungsstarker Kräne und Seilwinden zum Demontieren des Rotors kann mit Vorteil verzichtet werden.

Nach einer Weiterbildung der Erfindung wird der Rotor mit dem Hilfsmittel vom Rotorlager getrennt. Dazu wird der Rotor zuerst vom Rotorlager gelöst, dann vom Rotorlager wegbewegt und schließlich zum Rotor auf Abstand gehalten. Mit dem Trennen, des Rotors vom Rotorlager wird der erforderliche Platz geschaffen, der zum Lösen und Abnehmen des Rotorlagers vom Maschinenrahmen benötigt wird.

Nach einer nächsten Weiterbildung der Erfindung wird vorgeschlagen, daß das Hilfsmittel zum Wegbewegen des Rotors von seinem Rotorlager am Maschinenrahmen verschwenkt wird. Es liegt jedoch ebenso im Rahmen der Erfindung, daß das Hilfsmittel zum Wegbewegen des Rotors von seinem Rotorlager linear bewegt wird. Die Schwenkbewegung erfolgt vorzugsweise über eine quer zur Rotationsachse des Rotors angeordnete Horizontalachse.

Zur Befestigung des Rotors am Hilfsmittel wird vorgeschlagen, den Rotor während des Auswechselvorganges mit wenigstens einem Halteseil am Hilfsmittel aufzuhängen. Selbstverständlich kann hierfür auch eine Kette oder eine Gelenkstange eingesetzt werden.

Um den am Seil hängenden Rotor gegen unerwünschte Pendel- und Drehbewegungen, beispielsweise durch Windböen hervorgerufen, zu sichern, wird der Rotor während des Auswechselvorganges über seine Rotorflügel an wenigstens zwei zum Erdboden hin abgespannten Seilen gesichert. Die Seile werden dazu mit Vorteil jeweils im Bereich einer Rotorblattspitze angeschlagen.

Weist der Rotor drei Rotorflügel auf, wird der Rotor für die Dauer des Auswechselvorganges in eine Stellung gedreht, in der der freie Rotorflügel etwa senkrecht nach unten zeigt. Die anderen beiden Rotorflügel, an deren Blattspitzen die Seile angeschlagen sind, stehen in dieser Stellung seitlich nach oben weg. Die an den Rotorblättern angeschlagenen Seile bilden auf diese Weise gemeinsam mit dem Halteseil eine sichere Dreipunktlagerung aus, mit der unerwünschte Pendel- und Drehbewegungen weitgehend verhindert werden.

Nach einer anderen Weiterbildung der Erfindung wird eine am Hilfsmittel angeordnete Umlenkrolle lotrecht über dem Rotorlager ausgerichtet. Eine genaue Ausrichtung der Umlenkrolle erfolgt mit Vorteil durch Bewegen, insbesondere durch ein Verschwenken des Hilfsmittels am Maschinenrahmen. Es ist jedoch ebenso denkbar, daß die Ausrichtung durch Verschieben der Umlenkrolle am Hiifsmittel durchgeführt wird.

Vorzugsweise ist die Umlenkrolle in wenigstens einer weiteren Position am Hilfsmittel festsetzbar. In dieser Position wird die Umlenkrolle lotrecht über der Rotornabe, insbesondere in der Ebene ihrer Blattflansche, ausgerichtet.

Für den Auswechselvorgang wird das Rotorlager erfindungsgemäß mit dem Tragseil einer Seilwinde verbunden. Das Tragseil wird dann über die am Hilfsmittel angeordnete Umlenkrolle geführt, die dazu lotrecht über dem Rotorlager ausgerichtet ist. Mit der Umlenkrolle wird erreicht, daß das Hilfsmittel gemeinsam mit dem Turm der Windenergieanlage einen Kran ausbildet, der in der Lage ist, eigene Bauteile, insbesondere das Rotorlager, aus ihrer Montageposition heraus auf den Erdboden abzusenken bzw. von diesem in ihre Montageposition hineinzuheben. Dabei werden die Gewichtskräfte an der zuvor lotrecht über dem entsprechenden Bauteil positionierten Umlenkrolle umgelenkt und von der Seilwinde aufgenommen:

Für den Fall, daß die Umlenkrolle über der Rotomabe ausgerichtet wird, ist vorgesehen, das Tragseil in einer zwischen zwei Blattflanschen angeordneten Bohrung hindurchzuführen. Dann wird das Tragseil durch den Blattflansch des nach unten weisenden Rotorblattes hindurchgeführt und im Bereich der Blattwurzel eines zu demontierenden Rotorblattes angeschlagen. Damit ermöglicht das erfindungsgemäße Verfahren mit Vorteil ebenfalls das Auswechseln einzelner Rotorblätter.

Die erfindungsgemäße Vorrichtung zeichnet sich dadurch aus, daß sie wenigstens ein am Maschinenrahmen anbringbares Hilfsmittel mit einer Aufnahmeeinrichtung für den Rotor aufweist.

Das Hilfsmittel ist vorzugsweise als am Maschinenrahmen angelenkter Kranausleger mit wenigstens einem Zugseil zum Verschwenken des Kranauslegers ausgebildet. Dabei fungiert das Hilfsmittel als Druckkraftaufnehmer, an dem die Gewichtskraft des auszutauschenden Lagers über das Zugseil in den Maschinenrahmen umgelenkt wird. Es liegt außerdem im Rahmen der Erfindung, das Hilfsmittel als teleskopartig ein- und ausfahrbaren Kragträger auszubilden.

Das Zugseil ist erfindungsgemäß über einen Hydraulikzylinder mit dem Maschinenrahmen verbunden. Der Hydraulikzylinder dient dazu, den Rotor vom Rotorlager zu trennen. Es ist jedoch auch möglich, das Zugseil über eine Seilwinde mit dem Maschinenrahmen zu verbinden.

Die Aufnahmeeinrichtung für den Rotor weist ein am Hilfsmittel angeordnetes Halteseil mit einer vorbestimmten Länge auf. Vorteilhaft kann auch hier ein Hydraulikzylinder eingesetzt werden, der das Halteseil mit dem Hilfsmittel verbindet.

Es liegt weiterhin im Rahmen der Erfindung, daß das Hilfsmittel wenigstens eine Umlenkrolle für das Tragseil einer Seilwinde aufweist. Die Seilwinde ist bevorzugt am Maschinenrahmen festsetzbar, denkbar ist jedoch ebenfalls, daß die Seilwinde als mobile Seilwinde, beispielsweise als Autokran, vom Erdboden der Windenergieanlage aus mit der Umlenkrolle zusammenwirkt.

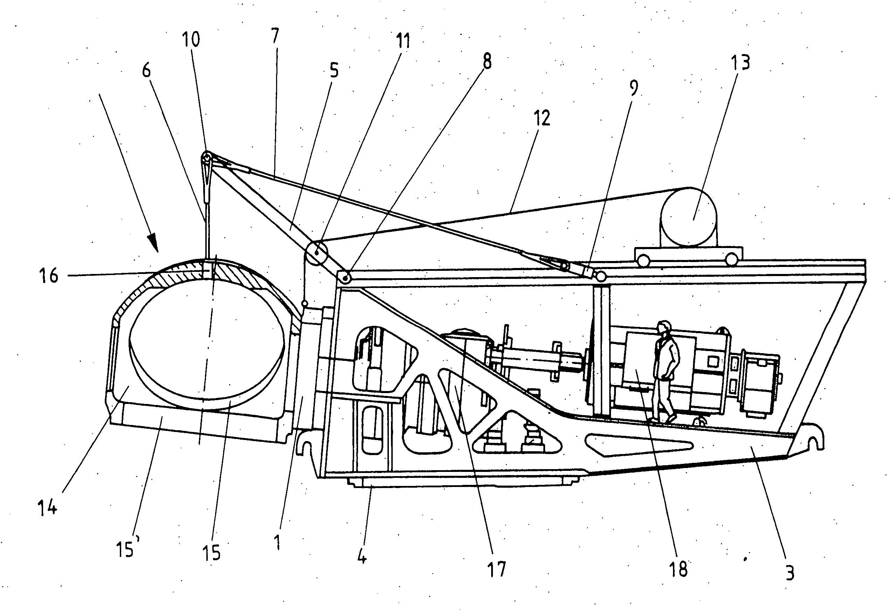

Ein Ausführungsbeispiel der Erfindung, aus dem sich weitere erfinderische Merkmale ergeben, ist in der Zeichnung dargestellt.

Die Figur zeigt eine Vorrichtung zum Auswechseln des Rotorlagers 1 am Gondelkopf einer Windenergieanlage. Der Gondelkopf weist einen Rotor 2 (ohne Darstellung der Rotorflügel) auf, der über das Rotorlager 1 mit einem Maschinenrahmen 3 verbunden ist. Der Maschinenrahmen 3 weist unterseitig einen Azimutdrehkranz 4 auf, mit dem der Gondelkopf auf dem Turm (nicht dargestellt) der Windenergieanlage gelagert wird. Die erfindungsgemäße Vorrichtung weist ein am Maschinenrahmen 3 angeordnetes Hilfsmittel 5 mit einer Aufnahmeeinrichtung 6 für den Rotor 2 auf. Das Hilfsmittel 5 ist als ein am Maschinenrahmen 3 angelenkter Kranausleger mit wenigstens einem Zugseil 7 zum Verschwenken des Hilfsmittels 5 um eine horizontale Schwenkachse 8 ausgebildet. Das Zugseil 7 ist über einen Hydraulikzylinder 9 mit dem Maschinenrahmen 3 verbunden. Die Aufnahmeeinrichtung 6 für den Rotor 2 ist als ein am freien Ende 10 des Hilfsmittels 5 angeordnetes Halteseil zum Aufhängen des Rotors 2 ausgebildet.

Das Hilfsmittel 5 weist eine Umlenkrolle 11 für das Tragseil 12 einer Kranwinde 13 auf. In der Figur steht die erfindungsgemäße Vorrichtung zum Auswechseln des Rotorlagers 1 bereit. Dazu ist die Umlenkrolle 11 lotrecht über dem Rotorlager 1 ausgerichtet. Dieses ist mit dem Tragseil 12 der Seilwinde 13 verbunden, wobei das Tragseil 12 über die am Hilfsmittel 5 angeordnete Umlenkrolle 11 geführt ist. Zum Auswechseln der in der Figur nicht dargestellten Rotorflügel wird die Umlenkrolle 11 lotrecht über der Rotomabe 14 ausgerichtet. Dann wird das Tragseil 12 in einer zwischen zwei Blattflanschen 15 angeordneten Bohrung 16 und durch den nach unten weisenden Blattflansch 15' hindurchgeführt und dort im Bereich der Blattwurzel eines Rotorblattes angeschlagen. Das Rotorlager 1 überträgt die vom Rotor 2 abgegebene Leistung in ein Getriebe 17, das mit einem Generator 18 verbunden ist.

## Patentansprüche

1. Verfahren zum Auswechseln des Rotorlagers einer Windenergieanlage mit wenigstens einem Rotor, der über das Rotorlager mit einem Maschinenrahmen verbunden ist,
**dadurch gekennzeichnet,**
**daß** der Rotor in seiner Gesamtheit (2) während des Auswechselvorganges über ein Hilfsmittel (5) am Maschinenrahmen (3) befestigt wird.

2. Verfahren nach Anspruch 1, **dadurch gekennzeichnet, daß** der Rotor (2) mit dem Hilfsmittel (5) vom Rotorlager (1) getrennt wird.

3. Verfahren nach Anspruch 2, **dadurch gekennzeichnet, daß** das Hilfsmittel (5) zum Wegbewegen des Rotors (2) von seinem Rotorlager (1) am Maschinenrahmen (3) verschwenkt wird.

4. Verfahren nach einem der Ansprüche 1 bis 3, **dadurch gekennzeichnet, daß** der Rotor (2) während des Auswechselvorganges mit wenigstens einem Halteseil am Hilfsmittel (5) aufgehängt wird.

5. Verfahren nach einem der Ansprüche 1 bis 4, **dadurch gekennzeichnet, daß** der Rotor (2) während des Auswechselvorganges über seine Rotorflügel an wenigstens zwei zum Erdboden hin abgespannten Seilen gesichert wird.

6. Verfahren nach einem der Ansprüche 1 bis 6, **dadurch gekennzeichnet, daß** eine am Hilfsmittel (5) angeordnete Umlenkrolle (11 ) lotrecht über dem Rotorlager (1) ausgerichtet wird.

7. Verfahren nach Anspruch 6, **dadurch gekennzeichnet, daß** das Rotorlager (1) für den Auswectiselvörgang mit dem Tragseil (12) einer Seilwinde (13) verbunden wird, wobei das Tragseil (12) über die am Hilfsmittel (5) angeordnete Umlenkrolle (11) geführt wird.

8. Vorrichtung zum Auswechseln des Rotorlagers einer Windenergieanlage mit wenigstens einem Rotor, der über das Rotorlager mit einem Maschinenrahmen verbunden ist, insbesondere zur Durchführung des Verfahrens nach einem der Ansprüche 1 bis 7,
**gekennzeichnet durch**
wenigstens ein am Maschinenrahmen (3) anbringbares Hilfsmittel (5) mit einer Aufnahmeeinrichtung (6) für den Rotor (2).

9. Vorrichtung nach Anspruch 8, **dadurch gekennzeichnet, daß** das Hilfsmittel (5) als ein am Maschinenrahmen (3) angelenkter Kranausleger mit wenigstens einem Zugseil (7) zum Verschwenken des Kranauslegers ausgebildet ist.

10. Vorrichtung nach Anspruch 9, **dadurch gekennzeichnet, daß** das Zugseil (7) über einen Hydraulikzylinder (9) mit dem Maschinenrahmen (3) verbunden ist.

11. Vorrichtung nach einem der Ansprüche 9 und 10, **dadurch gekennzeichnet, daß** die Aufnahmeeinrichtung (6) für den Rotor (2) ein am Hilfsmittel (5) angeordnetes Halteseil zum Aufhängen des Rotors (2) aufweist.

12. Vorrichtung nach einem der Ansprüche 1 bis 11, **dadurch gekennzeichnet, daß** das Hilfsmiftel (5) wenigstens eine Umlenkrolle (11) für das Tragseil (12) einer Seilwinde (13) aufweist
